# EUROPEAN PATENT APPLICATION

(11) **EP 4 756 262 A1**
(43) Date of publication of application: **10.06.2026**
(21) Application number: 24849140.9
(22) Date of filing: 29.07.2024
(51) Int. Cl.: F16J 15/08, F16J 15/14

(54) **GASKET AND SEALING DEVICE**

(30) Priority: 03.08.2023 JP 2023127164
(71) Applicant: NOK Corporation, Minato-ku Tokyo 105-8585 (JP)
(72) Inventor: SAITO, Ryoko, Nihonmatsu-shi, Fukushima 964-0811 (JP); MURAGISHI, Hirotaka, Nihonmatsu-shi, Fukushima 964-0811 (JP)
(74) Representative: TBK
(86) International application number: PCT/JP2024/026985
(87) International publication number: WO 2025/028489

(57) **Abstract**

A sealing device is configured by joining two members like a case and a cover with a metal-made divided gasket sandwiched therebetween. The divided gasket is divided into a plurality of pieces each having, at front and back surfaces thereof, flat seal surfaces covered with an elastic body. The individual pieces are connected with hinges so as to form a surrounded shape when they are combined. The hinges each span across each other's seal surfaces of the two adjacent pieces and rotate about an axis perpendicular to the longitudinal direction of the two adjacent pieces to foldably connect the two pieces. At least one of the two members is provided with a recess which accommodates the hinge protruding from the seal surface. The recess is filled with a liquid gasket which covers a portion where the two adjacent pieces are connected.

## Description

### Technical Field

The present disclosure relates to a gasket and a sealing device.

### Background Art

A gasket is interposed between two members to be joined, for example, a case and a cover, and seals the two members. The use applications of the gasket include sealing between an oil pan (case) used in an internal combustion engine and a cylinder block (cover) which blocks an opening portion of the oil pan, or sealing of joints of various types of piping, etc. The gasket has a surrounded shape for the purpose of sealing the two members.

In an application of sealing a member with a relatively large area such as an oil pan, a gasket also becomes larger, thereby making handling more complicated during the process from its manufacturing to assembly. Further, the gasket is manufactured by punching out a single metal plate, but the material inside the surrounded becomes a waste material, so that the larger the gasket, the more undesirable it becomes from both the cost and environmental aspect.

There has therefore been devised a divided gasket which is divided into a plurality of pieces and has a generally surrounded shape.

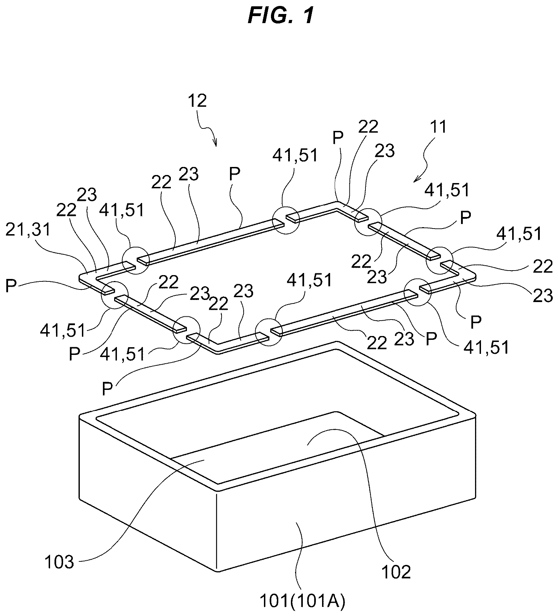

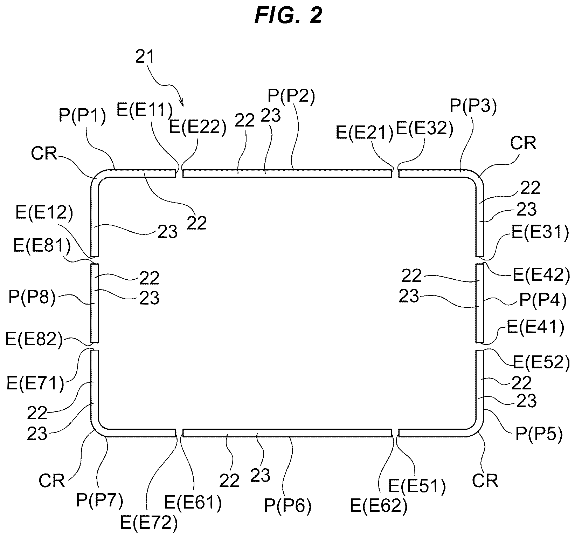

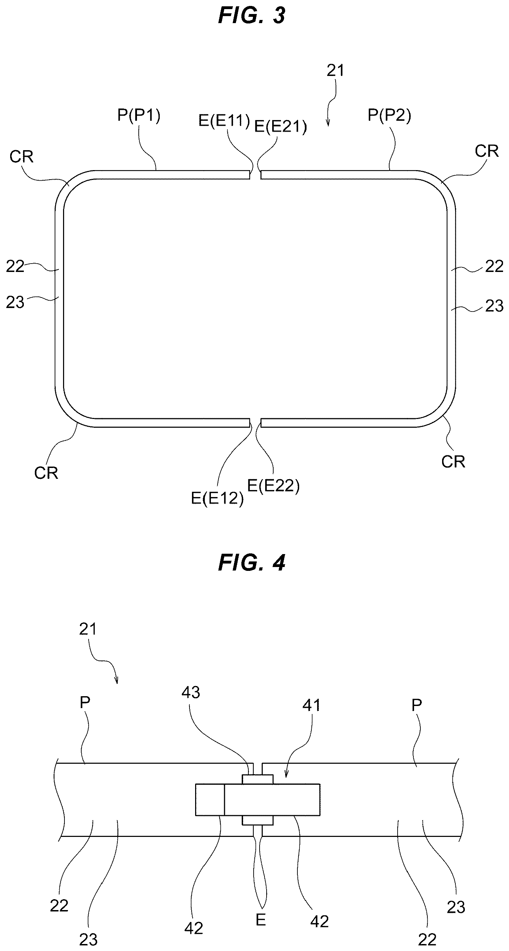

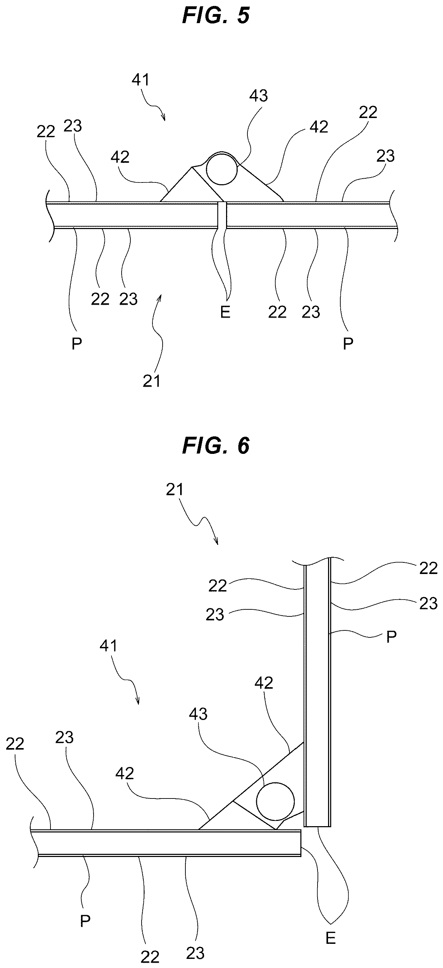

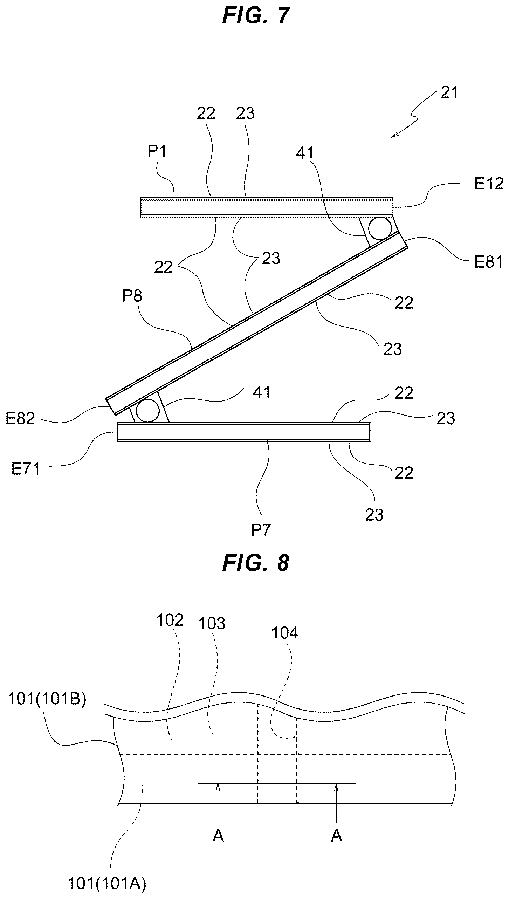

Japanese Patent Application Laid-Open No. 2007-155043 (hereinafter referred to as "Patent Document 1") discloses an example of a gasket which is applied to an oil pan gasket for an automobile engine (refer to paragraph 0014 and FIG. 1). This gasket is divided into two pieces (constituent materials 5a, 5b), and the two pieces are joined by laser spot welding (refer to paragraph 0015 and FIGS. 2 and 3). After joining, the two pieces are pressure-treated and smoothed (refer to paragraph 0016 and FIG. 3 and FIGS. 7(a) and 7(b)), and then an elastic body (rubber compound sheet 30) is adhesively fixed (refer to paragraph 0017 and FIGS. 3 and 6) to form a gasket (oil pan gasket 1).

Japanese Patent Application No. 2020-076467 (hereinafter referred to as "Patent Document 2") also divides a gasket into two pieces: a first divided piece (100A) and a second divided piece (100B), and joins the pieces to form a gasket (gasket 100) (refer to paragraphs 0020 and 0021 and FIGS. 1 and 2). The gasket is different from the gasket described in Patent Document 1 in the method of joining the pieces and the method of fixing the elastic body to each piece.

In Patent Document 2, the two pieces constituting the gasket, that is, the first divided piece (100A) and the second divided piece (100B) are each fixed by a liquid gasket (FIPG) (refer to paragraph 0020). As in Patent Document 1, they are not joined by laser spot welding.

The first divided piece (100A) and the second divided piece (100B) are materials obtained by punching out a rubber coated metal (RCM) in which a rubber film is provided on both surfaces of a metal plate (refer to paragraph 0022). Therefore, the elastic body is not fixed to the two pieces after joining, but is formed as a film on the two pieces in advance.

### Prior Art Documents

### Patent Documents

Patent Document 1: Japanese Patent Application Laid-Open No. 2007-155043
Patent Document 2: Japanese Patent Application Laid-Open No. 2020-076467

### Summary

### Problem to be Solved

In both the gaskets described in Patent Documents 1 and 2, the individual pieces are joined together to manufacture the surrounded gasket, which is then disposed between the two members joined to each other. Therefore, when viewed as the sealing device with the gasket interposed between the two members, a process of connecting the two pieces to manufacture the gasket is required prior to the process of joining the two members with the gasket sandwiched therebetween, and hence the manufacturing process is made complicated. Improvements are needed.

The objective of the present disclosure is to obtain a sealing device capable of reducing the number of steps required for its manufacture and simplifying its manufacturing.

### Means for Solving the Problem

One aspect of a gasket includes a metal-made divided gasket which is divided into a plurality of pieces each having, at front and back surfaces, flat seal surfaces covered with an elastic body and which forms a surrounded shape when the pieces are combined, and a hinge which spans across and is fixed to each other's seal surfaces of the two adjacent pieces on a straight line and which rotates about an axis perpendicular to the longitudinal direction of the two pieces to foldably connect the two pieces.

Another aspect of a gasket includes a metal-made divided gasket which is divided into a plurality of pieces each having, at front and back surfaces, flat seal surfaces covered with an elastic body and which forms a surrounded shape when the pieces are combined, and a connector which connects ends of the two adjacent pieces rotatably about an axis perpendicular to the seal surface.

One aspect of a sealing device includes a metal-made divided gasket which is divided into a plurality of pieces each having, at front and back surfaces, flat seal surfaces covered with an elastic body and which forms a surrounded shape when the pieces are combined, a hinge which spans across and is fixed to each other's seal surfaces of the two adjacent pieces on a straight line and which rotates about an axis perpendicular to the longitudinal direction of the two pieces to foldably connect the two pieces, two members joined to each other with the seal surfaces of the divided gasket sandwiched between the two members, a recess which is provided in at least one of the two members and accommodates the hinge protruding from the seal surface, and a liquid gasket filled in the recess and covering a connecting portion of the two pieces.

Another aspect of a sealing device includes a metal-made divided gasket which is divided into a plurality of pieces each having, at front and back surfaces, flat seal surfaces covered with an elastic body and which forms a surrounded shape when the pieces are combined, a connector which connects ends of the two adjacent pieces rotatably about an axis perpendicular to the seal surface, two members joined to each other with the seal surfaces of the divided gasket sandwiched between the two members, and a liquid gasket filled in a gap between the ends of the two pieces, which face each other.

### Effect

According to the present disclosure, it is possible to reduce the number of steps required to manufacture a sealing device and simplify its manufacturing.

### Brief Description of Drawings

FIG. 1 is an exploded perspective view illustrating a divided gasket and a case;
FIG. 2 is a plan view illustrating an example of a divided gasket according to a first embodiment;
FIG. 3 is a plan view illustrating another example of the divided gasket;
FIG. 4 is a plan view illustrating in an enlarged form, a state in which the ends of adjacent pieces of the divided gasket are connected by a hinge;
FIG. 5 is a front view illustrating in an enlarged form, a state in which the ends of the adjacent pieces of the divided gasket are connected by the hinge;
FIG. 6 is a front view illustrating in an enlarged form, a state in which each piece of the divided gasket is folded by the hinge;
FIG. 7 is a left side view illustrating the folded state of each piece of the divided gasket;
FIG. 8 is a front view illustrating in an enlarged form at a hinge position, a sealing device in the process of assembly with a gasket interposed between a cover having a groove-shaped recess and a case;
FIG. 9 is a front view illustrating in an enlarged form at a hinge position, a sealing device in the process of assembly with a gasket interposed between a cover having a hole-shaped recess and a case;
FIG. 10 is a cross-sectional view taken along line A-A in FIGS. 8 and 9;
FIG. 11 is a longitudinal sectional front view illustrating in an enlarged form, the sealing device before assembly at the hinge position;
FIG. 12 is a longitudinal sectional front view illustrating in an enlarged form, the sealing device after assembly at the hinge position;
FIG. 13 is a plan view illustrating an example of a divided gasket according to a second embodiment;
FIG. 14 is a plan view illustrating in an enlarged form, a state in which the ends of adjacent pieces of the divided gasket are connected by a connector;
FIG. 15 is a cross-sectional view taken along line B-B in FIG. 14;
FIG. 16 is a plan view illustrating in an enlarged form, a sealing device after assembly at a position of the connector; and
FIG. 17 is a cross-sectional view taken along line C-C in FIG. 16.

### Description of Embodiments

Embodiments of a sealing device will be described. Description items are as follows.

### [Summary]

### [First Embodiment]

1. Configuration
   (1) Gasket
      (1-1) Divided gasket
         (A) Example of divided gasket
         (B) Another example of divided gasket
      (1-2) Hinge
   (2) Sealing device
      (2-1) Recess
      (2-2) Liquid gasket
2. Assembly of sealing device
3. Action and effect
4. Modification

### [Second Embodiment]

1. Configuration
   (1) Gasket
      (1-1) Divided gasket
      (1-2) Connector
   (2) Sealing device
2. Assembly of sealing device
3. Action and effect
4. Modification

### [Summary]

As illustrated in FIGS. 1, 12, and 17, the sealing device 11 of the present embodiment is configured with two members 101 (101A, 101B) to be joined to each other and a gasket 12 as its components, with the gasket 12 interposed between the two members 101. The two members 101 are, for example, a case 101A and a cover 101B.

The gasket 12 has a structure mainly comprised of divided gaskets 21 and 31 divided into a plurality of pieces P and in which each piece P is pre-connected. The individual pieces P are connected by hinges 41 (first embodiment) or connectors 51 (second embodiment).

As an example, the sealing device 11 is used to seal between an oil pan and a cylinder block used in an internal combustion engine. The oil pan becomes the case 101A, and the cylinder block becomes the cover 101B. The case 101A is one of the two members 101, and has an oil reservoir 102 storing unillustrated oil provided thereinside and an opening portion 103 at its upper surface. The cover 101B is the other of the two members 101, and covers the opening portion 103 provided in the case 101A.

FIG. 1 illustrates an example of the gasket 12 illustrated in FIG. 2 among the gaskets 12 of the first embodiment. The hinges 41 and the connectors 51 are not illustrated directly, but are represented diagrammatically by circular marks. A divided gasket 21 as another example illustrated in FIG. 3, and a divided gasket 31 of the second embodiment are different in shape from the divided gasket 21 illustrated in FIG. 1, and the arrangement positions of the hinges 41 and the connectors 51 are also different. Refer to the description below.

### [First Embodiment]

The first embodiment will be described with reference to FIGS. 1 to 12.

### 1. Configuration

### (1) Gasket

### (1-1) Divided gasket

Two embodiments will be introduced.

### (A) Example of divided gasket

As illustrated in FIG. 2, the first gasket 12 has a divided gasket 21 which is divided into eight pieces P1 to P8, each of which has flat seal surfaces 23 covered with an elastic body 22 at its front and back surfaces thereof. The divided gasket 21 has a surrounded shape which becomes a rectangular shape when assembled. The eight pieces P1 to P8 are provided with four pieces on the long and short sides and four pieces at the corners. The pieces P1, P3, P5, and P7 are bent at right angles to form the four corners CR of the rectangular shape.

Each of the pieces P1 to P8 of the divided gasket 21 has ends E adjacent to each other at both ends. The adjacent ends E of the eight pieces P1 to P8 constituting the divided gasket 21 form pairs respectively. The details are as follows:
(a) end E11 of piece P1 and end E22 of piece P2,
(b) end E21 of piece P2 and end E32 of piece P3,
(c) end E31 of piece P3 and end E42 of piece P4,
(d) end E41 of piece P4 and end E52 of piece P5,
(e) end E51 of piece P5 and end E62 of piece P6,
(f) end E61 of piece P6 and end E72 of piece P7,
(g) end E71 of piece P7 and end E82 of piece P8, and
(h) end E81 of piece P8 and end E12 of piece P1

These eight types of ends E are paired together.

The individual pieces P1 to P8 of the divided gasket 21 are made of metal such as stainless steel, a cold-rolled steel plate, a galvanized steel plate, or an aluminum alloy, and are pre-coated with the elastic body 22 by coating, for example.

The elastic body 22 is a rubber compound containing rubber as a main component. For example, at least one type of synthetic rubber among nitrile rubber, styrene butadiene rubber, fluororubber, acrylic rubber, and silicone rubber can be used as the material for the elastic body 22. Rubber compounds using these materials may be foamed rubber.

### (B) Another example of divided gasket

As illustrated in FIG. 3, the second gasket 12 has a divided gasket 21 divided into two pieces P1 and P2, each of which has flat seal surfaces 23 covered with an elastic body 22 at its front and back surfaces. The divided gasket 21 has a surrounded shape which becomes a rectangular shape when assembled. Each of the two pieces P1 and P2 has a U-shape provided with two corners CR. The two corners CR bend the individual pieces P1 and P2 at right angles.

The individual pieces P1 and P2 of the divided gasket 21 have ends E adjacent to each other at both ends. The mutually adjacent ends E of the two pieces P1 and P2 constituting the divided gasket 21 form pairs respectively. The details are as follows:
(i) end E11 of piece P1 and end E21 of piece P2, and
(j) end E12 of piece P1 and end E22 of piece P2

These two types of ends E are paired together.

The individual pieces P1 and P2 of the divided gasket 21 are made of metal such as stainless steel, a cold-rolled steel plate, a galvanized steel plate, or an aluminum alloy, and are pre-coated with the elastic body 22 by coating, for example.

The elastic body 22 is a rubber compound containing rubber as a main component. For example, at least one type of synthetic rubber among nitrile rubber, styrene butadiene rubber, fluororubber, acrylic rubber, and silicone rubber can be used as the material for the elastic body 22. Rubber compounds using these materials may be foamed rubber.

### (1-2) Hinge

As illustrated in FIGS. 4 to 7, the individual pieces P constituting the divided gasket 21 are connected by hinges 41. The hinges 41 each span across and are fixed to the seal surfaces 23 of two adjacent pieces P on a straight line, and rotate about an axis perpendicular to the longitudinal direction of the two adjacent pieces P to connect the two pieces P in a foldable manner.

In the divided gasket 21 illustrated in FIG. 2, the hinge 41 is suspended between the two adjacent pieces P at the pair of ends E of (a) to (h).

In the divided gasket 21 illustrated in FIG. 3, the hinge 41 is suspended between the two adjacent pieces P at the pair of ends E of (i) and (j).

As illustrated in FIG. 5, the hinge 41 rotatably connects a pair of arms 42 with a pin 43. The pair of arms 42 are each fixed to the seal surface 23 on one surface side of the two adjacent pieces P. Therefore, as illustrated in FIG. 6, the two pieces P connected by the hinge 41 rotates around an axis that has the pin 43 as its axis.

The divided gasket 21 illustrated in FIG. 2 has each side divided into three. In FIG. 2, the top and bottom sides are divided into three: a set of pieces P1 and P7, a set of pieces P2 and P6, and a set of pieces P3 and P5. The left and right sides are divided into three: a set of pieces P1 and P3, a set of pieces P8 and P4, and a set of pieces P7 and P5. In the present embodiment, the hinges 41 are provided so that each of the three sets of top and bottom sides and the three sets of left and right sides can be folded alternately.

FIG. 7 is a left side view illustrating the folded state of the set of pieces P1 and P3, the set of pieces P8 and P4, and the set of pieces P7 and P5. Since FIG. 2 is viewed from the left side, only the pieces P1, P8, and P7 appear, and the pieces P3, P4, and P5 do not appear. As illustrated in FIG. 7, the adjacent hinges 41 are disposed on one surface side of the seal surface 23 and the opposite surface side thereof, respectively. In other words, the hinge 41 connecting the pieces P7 and P8 is fixed to the seal surface 23 on the upper surface side in FIG. 7, and the hinge 41 connecting the pieces P1 and P8 is fixed to the seal surface 23 on the lower surface side in FIG. 7, respectively. Consequently, the set of pieces P1 and P3, the set of pieces P8 and P4, and the set of pieces P7 and P5 are folded alternately.

### (2) Sealing device

### (2-1) Recess

As illustrated in FIGS. 8 to 10, the two members 101 are provided with recesses 104 accommodating the hinges 41 in areas where the two pieces P of the divided gasket 21 are adjacent to each other.

In the sealing device 11 using the divided gasket 21 illustrated in FIG. 2, the eight hinges 41 are provided and appropriately disposed on both seal surfaces 23. Therefore, a total of eight recesses 104 are provided in both the case 101A and the cover 101B.

In the sealing device 11 using the divided gasket 21 illustrated in FIG. 3, the two hinges 41 are fixed only to the seal surface 23 on the upper surface side, which faces the cover 101B. Therefore, the two recesses 104 are provided only in the cover 101B.

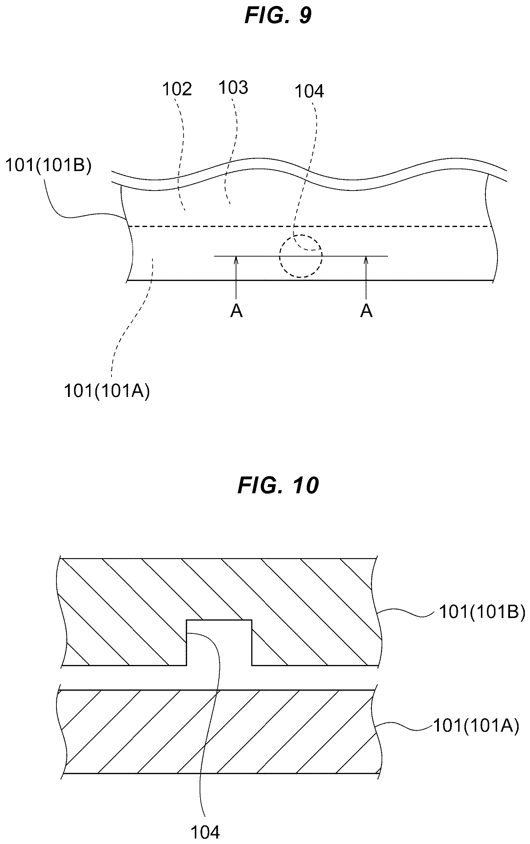

The recess 104 has a groove shape (refer to FIG. 8) as an example, and a hole shape (refer to FIG. 9) as another example. Even in any shape, the recess 104 is provided in a size which can completely cover the hinge 41 protruding from the seal surface 23. In the case of the groove shape illustrated in FIG. 8, the size of the recess 104 is determined by the groove width and depth. In the case of the hole-shaped recess 104 illustrated in FIG. 9, the size of the recess 104 is determined by the diameter of the hole.

### (2-2) Liquid gasket

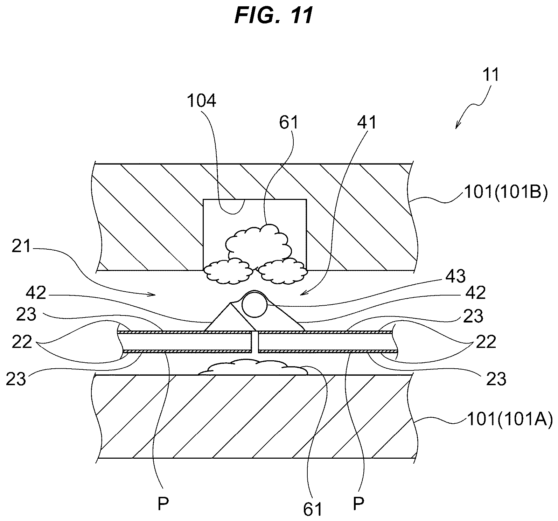

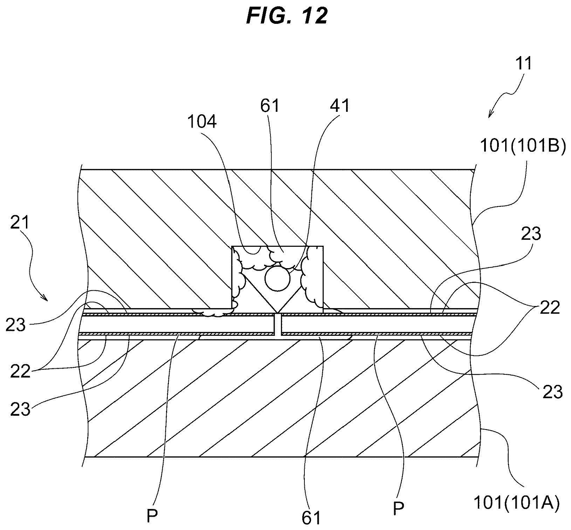

As illustrated in FIG. 11 and 12, the sealing device 11 fills the recess 104 with a liquid gasket 61. As an example, the liquid gasket 61 is a gasket which uses one-pack ordinary temperature curing type silicone called an FIPG (Formed In Place Gasket). The liquid gasket 61 is initially fluid and can be applied to each part. When it reacts with moisture in the air, the liquid gasket 61 hardens.

The liquid gasket 61 filled in the recess 104 penetrates between the ends E of the pieces P adjacent to each other, and also wraps around between the seal surface 23 of the divided gasket 21 and the case 101A, and between the seal surface 23 and the cover 101B. The liquid gasket 61 which penetrates and wraps around each part in this way reacts with moisture in the air and hardens.

### 2. Assembly of Sealing device

In order to join the two members 101 (101A, 101B) via the divided gasket 21 and assemble the sealing device 11, the liquid gasket 61 is applied to the recess 104. If necessary, the liquid gasket 61 is also applied to a position facing the recess 104 in the case 101A or the cover 101B.

Before or after the applying work of such a liquid gasket 61, the folded divided gasket 21 is opened and restored to the shape of the gasket 12.

Then, the gasket 12 is placed in a predetermined position on the case 101A. The case 101A and the cover 101B are then aligned so as to cover the opening portion 103 of the case 101A, and both of them are joined together by sandwiching the divided gasket 21 restored to the shape of the gasket 12 therebetween. This work is performed at a stage before the liquid gasket 61 hardens while it still retains its fluidity.

Once the liquid gasket 61 hardens, the sealing device 11 is completed.

### 3. Action and effect

The sealing device 11 exerts sealing action by the elastic body 22 of the gasket 12 sandwiched between the case 101A and the cover 101B which are joined to each other. Also, the hardened liquid gasket 61 fills space within the recess 104 which accommodates the hinge 41 and a gap which occurs between the ends E of the pieces P of the divided gasket 21, which are adjacent to each other. Since the hardened liquid gasket 61 has a certain degree of elasticity even after hardening, it also exerts the action of sealing the space and gap.

Therefore, according to the present embodiment, it is possible to seal the case 101A and the cover 101B joined to each other.

According to the present embodiment, each piece P of the divided gasket 21 is connected in advance by the hinge 41. Therefore, when assembling the sealing device 11, there is no need to manufacture the gasket 12 by connecting the multiple pieces P. The assembly of the sealing device 11 can be completed in a single process of simply joining the two members 101 with the gasket 12 sandwiched therebetween.

Therefore, according to the present embodiment, it is possible to reduce the number of manufacturing steps for the sealing device 11 and simplify its manufacture.

According to the present embodiment, since the divided gasket 21 can be folded, it is possible to reduce the size of the gasket 12 before its use. This makes it possible to reduce the space exclusive for storage and transportation.

According to the present embodiment, since the elastic body 22 is coated on the seal surface 23, it is possible to easily obtain the seal surface 23 covered with the elastic body 22, and to achieve ease of manufacturing.

### 4. Modification

Various deformations and changes are possible upon implementation.

For example, the folding mode of the divided gasket 21 is not limited to the examples illustrated in FIGS. 2 and 3, and any mode can be adopted. The hinge 41 may be provided on at least one pair of opposite sides forming a rectangular shape.

A base treatment layer may be provided between the seal surface 23 included in each piece P of the divided gasket 21 and the liquid gasket 61.

In the process of assembling the sealing device 11, in the present embodiment, there is illustrated the example in which the work of aligning the case 101A and the cover 101B and joining them with the divided gasket 21 sandwiched therebetween is performed at the stage before the liquid gasket 61 hardens. This timing between the hardening of the liquid gasket 61 and the above work is merely one example, and in implementation, the above work may be performed at a stage after the liquid gasket 61 hardens.

The liquid gasket 61 is not limited to the FIPG (Formed In Place Gasket), but liquid rubber (rubber glue) or CIPG (Cured In Place Gasket) may be used. As the liquid rubber, unvulcanized pasty rubber is used. CIPG is an ultraviolet-curing type silicone or the like, and while FIPG hardens by absorbing moisture in the air, CIPG hardens in place by exposure to ultraviolet light or light.

In order to assemble the sealing device 11 using the liquid rubber as the liquid gasket 61, the liquid rubber is applied to the recess 104. If necessary, the liquid rubber is also applied to a position facing the recess 104 in the case 101A or the cover 101B.

The folded divided gasket 21 is opened before or after the work of applying the liquid rubber and restored to the shape of the gasket 12.

The gasket 12 whose shape has been restored, is placed in a predetermined position on the case 101A. The case 101A and the cover 101B are then aligned so as to cover the opening portion 103 of the case 101A, and the two are joined together with the divided gasket 21 restored to the shape of the gasket 12 interposed therebetween.

The pasty liquid rubber hardens when it is dried or vulcanized (heated). When the liquid gasket 61 which is liquid rubber is hardened by drying, the work of sandwiching the divided gasket 21 between the case 101A and the cover 101B and joining them may be performed at the stage before the liquid rubber hardens or after it has hardened. When the liquid gasket 61 is hardened by vulcanization (heating), the above work is carried out at the stage where the liquid rubber is hardening or after it has hardened.

In order to assemble the sealing device 11 using CIPG as the liquid gasket 61, CIPG is applied to the recess 104. If necessary, CIPG is also applied to a position facing the recess 104 in the case 101A or the cover 101B.

CIPG is then hardened by exposure to ultraviolet or light.

The folded divided gasket 21 is opened before or after the work of applying CIPG and restored to the shape of the gasket 12.

The gasket 12 whose shape has been restored, is placed in a predetermined position on the case 101A. The case 101A and the cover 101B are then aligned so as to cover the opening portion 103 of the case 101A, and the two are joined together with the divided gasket 21 restored to the shape of the gasket 12 interposed therebetween. The joining work is performed at the stage where CIPG being the liquid gasket 61 is hardening or after it has hardened.

Any other deformations and changes are possible.

### [Second Embodiment]

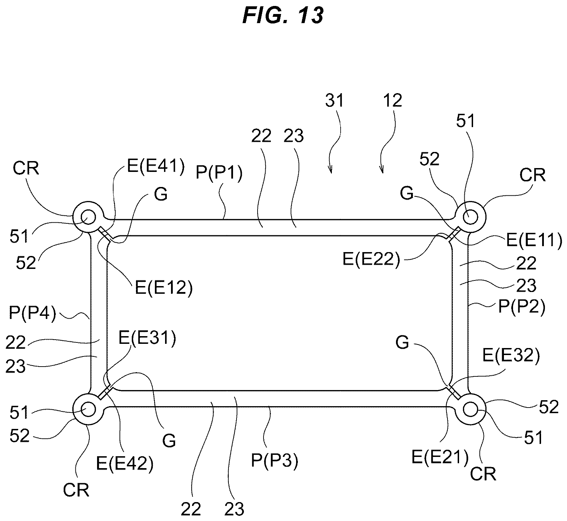

The second embodiment will be described with reference to FIGS. 13 to 17. The same parts as those in the first embodiment are denoted by the same reference numerals, and their description will also be omitted as appropriate.

### 1. Configuration

### (1) Gasket

### (1-1) Divided gasket

As illustrated in FIG. 13, a gasket 12 of the present embodiment includes a divided gasket 31 divided into four pieces P1 to P4 each having flat seal surfaces 23 covered with an elastic body 22 at its front and back surfaces. The divided gasket 31 has a surrounded shape which becomes a rectangular shape when assembled. The four pieces P1 to P4 are a pair of pieces P1 and P3 which forms the long sides of the rectangular shape, and a pair of pieces P2 and P4 which forms the short sides thereof. These four pieces P1 to P4 are combined together so that the divided gasket 31 takes on a rectangular shape.

The four pieces P1 to P4 of the divided gasket 31 have mutually adjacent ends E at both ends. The mutually adjacent ends E of the four pieces P1 to P4 constituting the divided gasket 31 form pairs respectively. The details are as follows:
(k) end E11 of piece P1 and end E22 of piece P2
(I) end E21 of piece P2 and end E32 of piece P3
(m) end E31 of piece P3 and end E42 of piece P4, and
(n) end E41 of piece P4 and end E12 of piece P1

These four types of ends E are paired together.

The individual pieces P1 to P4 of the divided gasket 31 are made of metal such as stainless steel, a cold-rolled steel plate, a galvanized steel plate, or an aluminum alloy, and are pre-coated with the elastic body 22 by coating, for example.

The elastic body 22 is a rubber compound containing rubber as a main component. For example, at least one type of synthetic rubber among nitrile rubber, styrene butadiene rubber, fluororubber, acrylic rubber, and silicone rubber can be used as the material for the elastic body 22. Rubber compounds using these materials may be foamed rubber.

### (1-2) Connector

The four pieces P1 to P4 of the divided gasket 31 are connected by connectors 51 at positions which form the four corners CR of the rectangular shape. The four corners CR are provided at four locations between the pieces P1 and P2, P2 and P3, P3 and P4, and P4 and P1.

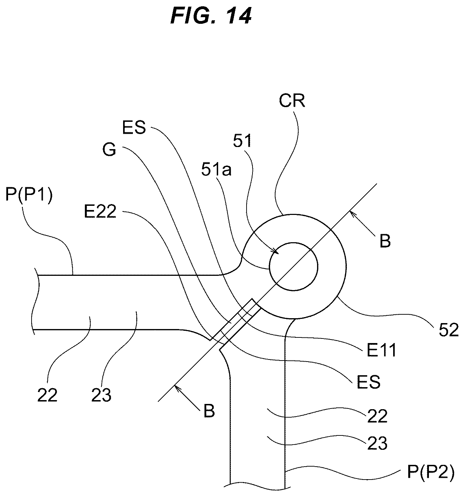

As illustrated in FIG. 14, the ends E of the pieces P adjacent to each other at the positions of the four corners CR are disposed with their end surface ES facing each other. The end surfaces ES are not perpendicular to the longitudinal direction of the piece P, but are at a 45 degree angle.

FIG. 14 illustrates a state in which the end E11 of the piece P1 and the end E22 of the piece P2 make the end surfaces ES forming the 45-degree angle to face each other, thereby forming the right angle CR. The end surfaces ES do not come into contact with each other and leaves a gap G therebetween. This arrangement of adjacent pieces P is similar not only between the pieces P1 and P2, but also between P2 and P3, between P3 and P4, and between the piece P4 and P1.

As illustrated in FIGS. 13 to 15, the four pieces P1 to P4 of the divided gasket 31 have circular connecting pieces 52 with connecting holes 52a defined therein at the ends E of both ends which form the corners CR of the rectangular shape. The connecting pieces 52 are provided at positions which are further outside the rectangular shape than the end surfaces ES.

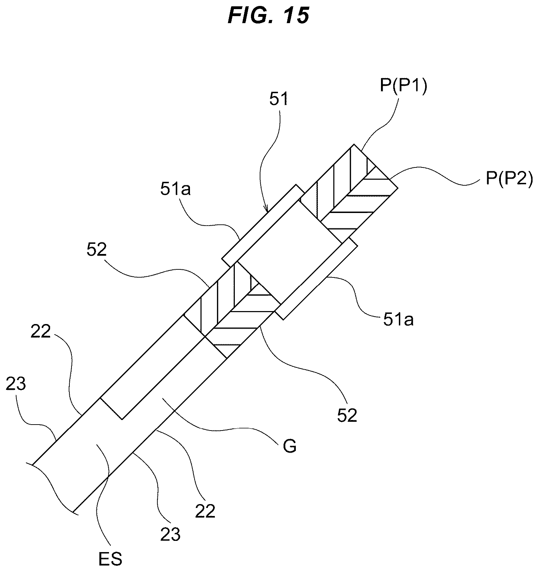

As illustrated in FIGS. 14 and 15, the adjacent pieces P1 and P2 have each other's connecting pieces 52 overlapped with each other and cause the connector 51 to pass through the connecting hole 52a. The connector 51 is, for example a rivet, and passes through the connecting hole 52a provided in the two connecting pieces 52 and is prevented from coming out by large diameter portions 51a at both ends. Thus, the pieces P1 and P2 are connected to be rotatable around an axis perpendicular to the seal surface 23.

When the connector 51 is of the rivet, one of the large diameter portions 51a is a pre-installed head portion, and the other thereof is a portion which has been crushed to expand its diameter. This type of connection structure between the adjacent pieces P is similar not only between the pieces P1 and P2, but also between the pieces P2 and P3, between the pieces P3 and P4, and between the pieces P4 and P1.

The individual pieces P of the divided gasket 31 must have the seal surfaces 23 located on both surfaces positioned in the same plane in view of the structure that constitutes the gasket 12. In contrast, the connecting pieces 52 overlap the two adjacent pieces P in the axial direction of the connector 51. Therefore, in the present embodiment, the thickness of the connecting piece 52 is reduced to half so that the thickness of each individual piece P is made to coincide with the thickness of the two overlapping connecting pieces 52.

Refer to FIG. 15 which is a cross-sectional view taken along line B-B in FIG. 14. In FIG. 15, the thinned connecting piece 52 of the piece P1 is illustrated above, and the thinned connecting piece 52 of the piece P2 is illustrated below, respectively.

The individual pieces P1 to P4 of the divided gasket 31 are made of metal such as stainless steel, a cold-rolled steel plate, a galvanized steel plate, or an aluminum alloy, and are pre-coated with the elastic body 22 by coating, for example.

The elastic body 22 is a rubber compound containing rubber as a main component. For example, at least one type of synthetic rubber among nitrile rubber, styrene butadiene rubber, fluororubber, acrylic rubber, and silicone rubber can be used as the material for the elastic body 22. Rubber compounds using these materials may be foamed rubber.

When the two adjacent pieces P are connected together with the connector 51, these pieces P are connected so as to be freely rotatable around the axis of the connector 51, but the amount of their rotation is small because the non-thinned portions of the pieces P collide with each other. The four pieces P1 to P4 become a state in which they are, so to speak, loosely connected, so that the gap G is formed between the mutually facing end surfaces ES provided at each end E.

### (2) Sealing device

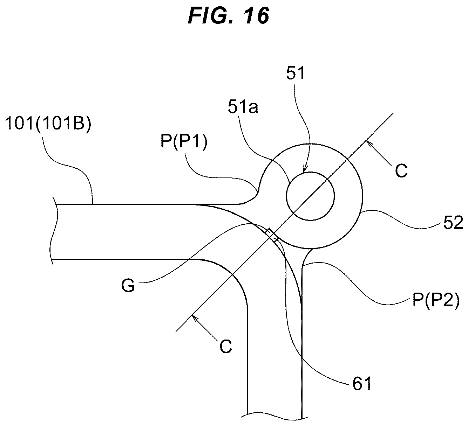

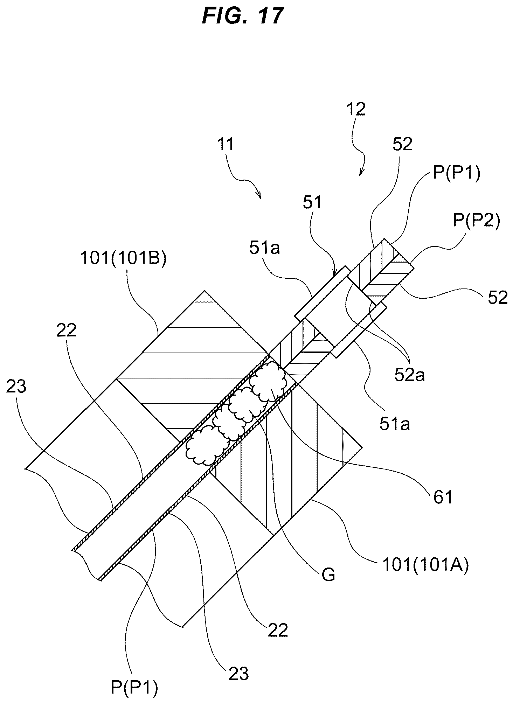

As illustrated in FIGS. 16 and 17, the sealing device 11 sandwiches the gasket 12 between the two members 101 (101A and 101B). The gasket 12 fills the gap G between the ends E of the two adjacent pieces P with the liquid gasket 61. As an example, the liquid gasket 61 is a gasket which uses one-pack ordinary temperature curing type silicone called an FIPG (Formed In Place Gasket). The liquid gasket 61 is initially fluid and can be applied to each part. When it reacts with moisture in the air, the liquid gasket 61 hardens.

### 2. Assembly of sealing device

In order to join the two members 101 (101A, 101B) via the divided gasket 31 and assemble the sealing device 11, the gasket 12 is placed in a predetermined position on the case 101A. The liquid gasket 61 is then filled into the gap G between the end surfaces ES of the two adjacent pieces P. Thereafter, the case 101A and the cover 101B are aligned so as to cover the opening portion 103 of the case 101A, and both of them are joined together by sandwiching the divided gasket 31 therebetween. This work is performed at a stage before the liquid gasket 61 hardens, in a state in which the liquid gasket 61 maintains its fluidity.

Once the liquid gasket 61 hardens, the sealing device 11 is completed.

### 3. Action and effect

The sealing device 11 exerts sealing action by the elastic body 22 of the gasket 12 sandwiched between the case 101A and the cover 101B which are joined to each other. Also, the hardened liquid gasket 61 fills the gap G between each other's end surfaces ES of the two adjacent pieces P. Since the hardened liquid gasket 61 has a certain degree of elasticity even after hardening, it also exerts the action of sealing the gap G.

Therefore, according to the present embodiment, it is possible to seal the case 101A and the cover 101B joined to each other.

According to the present embodiment, each piece P of the divided gasket 31 is connected in advance by the connector 51. Therefore, when assembling the sealing device 11, there is no need to manufacture the gasket 12 by connecting the multiple pieces P. The assembly of the sealing device 11 can be completed in a single process of simply joining the two members 101 with the gasket 12 sandwiched therebetween.

Therefore, according to the present embodiment, it is possible to reduce the number of manufacturing steps for the sealing device 11 and simplify its manufacture.

According to the present embodiment, since the elastic body 22 is coated on the seal surface 23, it is possible to easily obtain the seal surface 23 covered with the elastic body 22 and achieve ease of manufacturing.

### 4. Modification

Various deformations and changes are possible upon implementation.

For example, the connector 51 is not limited to the rivet, and any type of rotating connection structure such as a pin which rotatably connects two members or a concave-convex fitting structure can be adopted.

The positions of connection of the individual pieces P of the divided gasket 31 by the connector 51 may be not only at the corners CR, but also at positions where the two pieces P are adjacent to each other on the straight line.

A base treatment layer may be provided between the seal surface 23 included in each piece P of the divided gasket 31 and the liquid gasket 61.

In the process of assembling the sealing device 11, in the present embodiment, there is illustrated the example in which the work of aligning the case 101A and the cover 101B and joining them with the divided gasket 31 sandwiched therebetween is performed at a stage before the liquid gasket 61 hardens. This timing between the hardening of the liquid gasket 61 and the above work is merely one example, and in implementation, the above work may be performed at a stage after the liquid gasket 61 hardens.

The liquid gasket 61 is not limited to FIPG (Formed In Place Gasket), but liquid rubber (rubber glue) or CIPG (Cured In Place Gasket) may be used. As the liquid rubber, unvulcanized pasty rubber is used. CIPG is an ultraviolet-curing type silicone or the like, and whereas FIPG hardens by absorbing moisture in the air, CIPG hardens in place by exposure to ultraviolet light or light.

In order to assemble the sealing device 11 using the liquid rubber as the liquid gasket 61, the gasket 12 is placed in a predetermined position on the case 101A.

Next, the liquid rubber is filled into the gap G between each other's end surfaces ES of the two adjacent pieces P.

Then, the case 101A and the cover 101B are aligned so as to cover the opening portion 103 of the case 101A, and the two are joined together with the divided gasket 31 sandwiched therebetween.

The pasty liquid rubber hardens when it is dried or vulcanized (heated). When the liquid gasket 61 which is liquid rubber is hardened by drying, the work of sandwiching the divided gasket 31 between the case 101A and the cover 101B and joining them may be performed at the stage before the liquid rubber hardens or after it has hardened. When the liquid gasket 61 is hardened by vulcanization (heating), the above work is performed at the stage where the liquid rubber is hardening or after it has hardened.

In order to assemble the sealing device 11 using CIPG as the liquid gasket 61, the gasket 12 is placed in a predetermined position on the case 101A.

Next, CIPG is filled into the gap G between each other's end surfaces ES of the two pieces P adjacent to each other, and CIPG is hardened by irradiating it with ultraviolet light or light.

Then, the case 101A and the cover 101B are aligned so as to cover the opening portion 103 of the case 101A, and the two are joined together with the divided gasket 31 sandwiched therebetween. The joining work is performed at the stage where CIPG being the liquid gasket 61 is hardening, or after it has hardened.

Any other deformations or changes are possible.

### Description of Reference Numerals

- 11: sealing device
- 12: gasket
- 21: divided gasket
- 22: elastic body
- 23: seal surface
- 31: divided gasket
- 41: hinge
- 42: arm
- 43: pin
- 51: connector
- 51a: large diameter portion
- 52: connecting piece
- 52a: connecting hole
- 61: liquid gasket
- 101: two members
- 101A: case
- 101B: cover
- 102: oil reservoir
- 103: opening portion
- 104: recess
- CR: angle
- E (E11, E12, E21, E22, ..., E81, E82): end
- E (E11, E12, E21, E22): end
- E (E11, E12, E21, E22, ..., E41, E42): end
- ES: end surface
- G: gap
- P (P1 to P8): piece
- P (P1, P2): piece
- P (P1 to P4): piece

## Claims

1. A gasket comprising:
a metal-made divided gasket which is divided into a plurality of pieces each having, at front and back surfaces, flat seal surfaces covered with an elastic body and which forms a surrounded shape when the pieces are combined; and
a hinge which spans across and is fixed to each other's seal surfaces of the two adjacent pieces on a straight line and which rotates about an axis perpendicular to the longitudinal direction of the two pieces to foldably connect the two pieces.

2. The gasket according to Claim 1, wherein the divided gasket with the pieces combined with each other has a rectangular shape, and
wherein the hinge is provided on at least one pair of opposite sides forming a rectangular shape.

3. The gasket according to Claim 2, wherein the hinges adjacent to each other are arranged on one surface side of the seal surface and on the opposite surface side of the seal surface, respectively.

4. The gasket according to any one of Claims 1 to 3, wherein the elastic body is coated on the seal surface.

5. A gasket comprising:
a metal-made divided gasket which is divided into a plurality of pieces each having, at front and back surfaces, flat seal surfaces covered with an elastic body and which forms a surrounded shape when the pieces are combined; and
a connector which connects ends of the two adjacent pieces rotatably about an axis perpendicular to the seal surface.

6. The gasket according to Claim 5, wherein the divided gasket with the pieces combined with each other has a rectangular shape, and
wherein the connector is provided at each of the four corners which form a rectangular shape.

7. The gasket according to Claim 5 or 6, wherein the elastic body is coated on the seal surface.

8. A sealing device comprising:
a metal-made divided gasket which is divided into a plurality of pieces each having, at front and back surfaces, flat seal surfaces covered with an elastic body and which forms a surrounded shape when the pieces are combined;
a hinge which spans across and is fixed to each other's seal surfaces of the two adjacent pieces on a straight line and which rotates about an axis perpendicular to the longitudinal direction of the two pieces to foldably connect the two pieces;
two members joined to each other with the seal surfaces of the divided gasket sandwiched between the two members;
a recess which is provided in at least one of the two members and accommodates the hinge protruding from the seal surface; and
a liquid gasket filled in the recess and covering a connecting portion of the two pieces.

9. The sealing device according to Claim 8, wherein the sealed surfaces of the two members and the divided gasket have a rectangular shape, and
wherein the hinge is provided on at least one pair of opposite sides forming a rectangular shape.

10. The sealing device according to Claim 8, wherein the adjacent hinges are arranged on one surface side of the seal surface and on the opposite surface side of the seal surface, respectively.

11. The sealing device according to Claim 8, wherein the recess has a groove shape.

12. The sealing device according to Claim 8, wherein the recess has a shape of a hole.

13. The sealing device according to Claim 8, wherein the elastic body is coated on the seal surface.

14. The sealing device according to any one of Claims 8 to 13, wherein one of the two members is a case, and
wherein the other of the two members is a cover which covers an opening portion of the case.

15. A sealing device comprising:
a metal-made divided gasket which is divided into a plurality of pieces each having, at front and back surfaces, flat seal surfaces covered with an elastic body and which forms a surrounded shape when the pieces are combined;
a connector which connects ends of the two adjacent pieces rotatably about an axis perpendicular to the seal surface;
two members joined to each other with the seal surfaces of the divided gasket sandwiched between the two members; and
a liquid gasket filled in a gap between the ends of the two pieces, which face each other.

16. The sealing device according to Claim 15, wherein the sealed surfaces of the two members and the divided gasket have a rectangular shape, and
wherein the connector is provided at each of the four corners which form a rectangular shape.

17. The sealing device according to Claim 15, wherein the elastic body is coated on the seal surface.

18. The sealing device according to any one of Claims 15 to 17, wherein one of the two members is a case, and
wherein the other of the two members is a cover which covers an opening portion of the case.
